(19) Europäisches Patentamt
European Patent Office
Office européen des brevets

(11) Veröffentlichungsnummer: **0 324 747**
**B1**

(12) # EUROPÄISCHE PATENTSCHRIFT

(45) Veröffentlichungstag der Patentschrift: **12.12.90**

(51) Int. Cl.$^5$: **C 08 F 230/08**, C 08 F 22/00, C 09 D 127/06

(21) Anmeldenummer: **87905748.7**

(22) Anmeldetag: **04.09.87**

(86) Internationale Anmeldenummer: **PCT/EP87/00499**

(87) Internationale Veröffentlichungsnummer: **WO 88/02010 24.03.88 Gazette 88/07**

(60) **Verbunden mit 87112924.3/0263306 (europäische Anmeldenummer/Veröffentlichungsnummer) durch Entscheidung vom 19.04.90.**

(54) **SILYLGRUPPEN ENTHALTENDES VERZWEIGTES POLYMERISAT, VERFAHREN ZU SEINER HERSTELLUNG, ÜBERZUGSMITTEL AUF BASIS DES POLYMERISATS SOWIE DEREN VERWENDUNG.**

(30) Priorität: **10.09.86 DE 3630793**

(43) Veröffentlichungstag der Anmeldung: **26.07.89 Patentblatt 89/30**

(45) Bekanntmachung des Hinweises auf die Patenterteilung: **12.12.90 Patentblatt 90/50**

(84) Benannte Vertragsstaaten: **AT BE CH DE ES FR GB IT LI NL SE**

(56) Entgegenhaltungen:
**EP-A-0 075 957**
**EP-A-0 169 536**

**Patent abstracts of Japan, Band 8, Nr 184 (C-239) (1621), 23 August 1984 & JP, A, 59-78222**

(73) Patentinhaber: **BASF Lacke + Farben Aktiengesellschaft**
**Max-Winkelmann-Strasse 80**
**D-4400 Münster (DE)**

(72) Erfinder: **JUNG, Werner, Alfons**
**Uhrwerkerstrasse 65**
**D-4715 Ascheberg (DE)**
Erfinder: **SCHMITZ, Arno**
**Lerchenhain 92**
**D-4405 Nottuln (DE)**

(74) Vertreter: **Leifert, Elmar, Dr.**
**BASF Lacke + Farben AG Patentabteilung**
**Max-Winkelmann-Strasse 80 Postfach 61 23**
**D-4400 Münster (DE)**

**EP 0 324 747 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft ein Silylgruppen enthaltendes Polymerisat, wobei die Silylgruppen durch ethylenisch ungesättigte Monomere der allgemeinen Formel

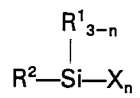

(a)

mit

$R^1$ = Alkyl, Aryl, Acyl, Aralkyl mit 1 bis 10 Kohlenstoffatomen
$R^2$ = organischer Rest mit polymerisierbarer Doppelbindung
X = hydrolisierbare Gruppe
n = 1, 2 oder 3

in das Polymerisat eingebracht werden.

Aus der EP—A—158 161 sind Hydroxylgruppen enthaltende verzweigte Acrylatcopolymerisate bekannt, die erhalten werden durch Copolymerisation von hydroxylgruppenhaltigen Estern der Acryl- oder Methacrylsäure, Monomeren mit mindestens 2 polymerisierbaren, olefinisch ungesättigten Doppelbindungen und weiteren ethylenisch ungesättigten Monomeren. Die verzweigten Acrylatcopolymerisate können mit Melamin-Formaldehyd-Harzen oder mit Polyisocyanaten zu einem Überzugsmittel kombiniert werden, welches bei niedrigen Temperaturen gehärtet werden kann. Die Überzugsmittel haben gute Eigenschaften in bezug auf Benzinfestigkeit und Beständigkeit gegenüber langfristiger Belastung durch Wasser bzw. Waserdampf, wobei diese Eigenschaften insbesondere auf die verzweigte Struktur der Acrylatcopolymerisate zurückzuführen sind.

Aus der EP—A—48 461 und der EP—A—63 753 sind Vinylharze bekannt, die Silylgruppen enthalten, welche mit einem hydrolisierbaren Rest verknüpft sind. Die Silylgruppen enthaltenden Polymerisate können u.a. erhalten werden durch radikalische Polymerisation von Silylmonomeren der allgemeinen Formel

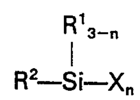

(a)

mit

$R^1$ = Alkyl, Aryl, Acyl, Aralkyl mit 1 bis 10 Kohlenstoffatomen
$R^2$ = organischer Rest mit polymerisierbarer Doppelbindung
X = hydrolisierbare Gruppe
n = 1, 2 oder 3

Darüber hinaus sind die Polymeren herstellbar durch katalytische Hydrosilylierung an die Doppelbindungen eines Polymeren mit olefinisch ungesättigten Gruppen. Die beschriebenen, in organischem Lösungsmittel gelösteon Harze ergeben Einkomponenten-Überzugszusammensetzungen, die bei Verwendung geeigneter Härtungskatalysatoren unter Feuchtigkeitseinfluß bereits bei niedrigen Temperaturen aushärten.

Aus der EP—A—63 817 ist ein Metallic-Basislack bekannt, der Silylgruppen enthaltende Polymerisate, wobei die Silylgruppen an hydrolisierbare Gruppen gebunden sind, ein Acrylatharz und/oder eine Celluloseverbindung und/oder eine rekative Silicon-Komponente enthält.

Aus den US-Patentschriften Nr. 4,499,150 und 4,499,151 sind Basislack/Klarlack-Systeme bekannt, bei denen entweder der Basislack, der Klarlack oder sowohl der Basis- als auch der Klarlack Polyadditionsprodukte mit Alkoxy- oder Acyloxysilaneinheiten enthalten. Der Basislack kann nach kurzem Ablüften mit dem Klarlack überlackiert werden. Gemäß dieser Patentschriften können für das Polyacrylat alle üblichen Monomeren mit midestens einer Doppelbindung verwendet werden. In der Beschreibung und in den Ausführungsbeispielen werden ausschließlich Monomere mit einer ethylenisch ungesättigten Doppelbindung zur Herstellung der Silylgruppen enthaltenden Acrylatcopolymerisate verwendet.

Die EP—A—159 715 beschreibt ein Silicon-Polymer, welches erhältlich ist durch Polymerisation von mindestens einem ethylenisch ugesättigten Monomeren mit reaktiven, hydrolisierbaren Silicongruppen, einer Verbindung mit mindestens zwei ethylenisch ungesättigten Gruppen und in Gegenwart eines radikalischen Initiators oder eines Polymerisationsreglers mit reaktiven Silicongruppen. Als organisches Polymeres wird beispielsweise ein Polyalkylenoxid mit reaktiven Silicongruppen verwendet. Diese reaktiven Silicongruppen sind befähigt, Kondensationsreaktionen in Gegenwart von Feuchtigkeit und in Gegenwart geeigneter Katalysatoren einzugehen. Das beschriebene feuchtigkeitshärtbare Polymere ist beispielsweise erhältlich durch Reaktion von 100 Teilen des ungesättigten Monomeren, 10 bis 1000 Teilen des Siliconpolymeren, 0,5 bis 50 Teilen der Monomeren mit mindestens zwei unabhängigen ethylenisch ungesättigten Gruppen und 0,01 bis 20 Teilen des Silicon-Reglers oder des Silicon-Initiators. Ein zu hoher Anteil an polyfunktionellem Monomer führt zum Gelieren, des weiteren ist die Gelierungstendenz abhängig sowohl vom Regler- als auch von Initiatorgehalt.

Unter den genannten Reaktionsbedingungen ist eine Pfropfreaktion der ethylenisch ungesättigten Monomeren auf das vorgelegte Siliconharz nicht auszuschließen. In der EP—A—159 715 erfolgt die Aussage, daß ein zu hoher Anteil an polyfunktionellen Monomeren zur Gelierung des Produktes führen kann.

Die beschriebenen Zusammensetzungen führen zu einer verbesserten Zugfestigkeit des gehärteten Polymeren. Ein Nachteil der beschriebenen Zusammensetzungen besteht darin, daß ein hoher Anteil an unerwünschten Nebenreaktionen auftreten kann. Der genannten Druckschrift ist nicht zu entnehmen, daß eine Abhängigkeit zwischen der Gelierungstendenz und der Polymerisationstemperatur besteht.

Die EP—A—159 716 beschreibt Siliconharze, welche hergestellt werden durch Polymerisation von mindestens einer ungesättigten Verbindung in Gegenwart eines organischen Polymeren mit reaktiven, hydrolisierbaren Silicongruppen und mit ethylenisch ungesättigten Gruppen und mindestens einer Komponente aus der Gruppe von Siliconreglern oder Siliconinitiatoren. Das organische Polymere basiert beispielsweise auf Polyalkylenoxiden. Zusammen mit ethylenisch ungesättigten Monomeren können auch Verbindungen mit mindestens zwei ethylenisch ungesättigten Doppelbindungen polymerisiert werden, wobei auch Silicon-modifizierte Monomere verwendet werden. Ein zu hoher Anteil an mehrfach ethylenisch ungesättigten Monomeren führt zur Gelierung, gemäß der Beschreibung der EP—A—159 716 ist die Polymerisationstemperatur nicht kritisch für die Gelierungstendenz.

Die EP—A—169 536 beschreibt feuchtigkeitshärtende Systeme auf Basis eines Polymeren mit mindestens einer reaktiven Silicongruppe pro Molekül und auf der Basis von Silanolverbindungen bzw. Verbindungen, die zu Silanolen hydrolisieren können. Bei der Feuchtigkeitshärtung reagieren die Silicongruppen des Polymeren mit der Silanolverbindung in der Weise, daß ein Teil der reaktiven Silicongruppen nicht mehr als Vernetzungsstellen zur Verfügung stehen, sondern lediglich zur Kettenverlängerung dienen. Die beschriebenen Zusammensetzungen härten unter dem Einfluß von Feuchtigkeit zu einem elastomeren Material mit guter Zugfestigkeit und guten Oberflächeneigenschaften. Die Zusammensetzungen werden bevorzugt verwendet als Versiegelungsmaterialien.

Das Polymere mit mindestens einer reaktiven Silicongruppe pro Molekül kann durch Additionspolymerisation gebildet werden, wobei Monomere mit reaktiven Silicongruppen mitverwendet werden. Bei dieser Additionspolymerisation können auch Monomere mit mindestens zwei ethylenisch ungesättigten Doppelbindungen mit in das Additionspolymere eingebaut werden. In den Ausführungsbeispielen werden diese in einem Anteil von weniger als 4 Gew.%, bezogen auf das Gesamtgewicht der Monomeren, bei der Additionspolymerisation verwendet. Die Verbesserung der Elastizität der erhaltenen Überzüge wird insbesondere zurückgeführt auf den Zusatz der Silanol-Komponente.

Die Aufgabe der vorliegenden Erfindung bestand darin, Bindemittel für feuchtigkeitshärtende Einkomponenten-Beschichtungsmittel zur Verfügung zu stellen, wobei diese bei niedriger Temperatur aushärten sollten und die resultierenden Überzüge im Vergleich zu den bekannten feuchtigkeitshärtenden Siliconharzen verbesserte Eingenschaften bezüglich Benzinfestigkeit und bezüglich der Beständigkeit gegenüber langfristiger Belastung durch Wasesr bzw. Wasserdampf aufweisen sollten. Die Überzugsmittel sollten sich problemlos und unter weitgehender Vermeidung von Nebenreaktionen darstellen lassen.

Die der Erfindung zugrundeliegende Aufgabe wird durch ein Silylgruppen enthaltendes Polymerisat der eingangs genannten Art gelöst, das dadurch gekennzeichnet ist, daß das Polymerisat erhälten ist durch Copolymerisation von

a) 0,1 bis 40 Gew.% der Silanmonomeren (a),

b) 5 bis 30 Gew.%, bevorzugt 8 bis 25 Gew.%, Monomeren mit mindestens zwei polymerisierbaren enthlenisch ungesättigten Doppelbindungen und

c) 30 bis 90 Gew.% ethylenisch ungesättigten Monomeren ohne Gruppen mit aktivem Wasserstoff, wobei die Summe von a), b) und c) 100 Gew.% beträgt.

Als Silanmonomere (Komponente a) werden ethlenisch ungesättigte Monomere der allgemeinen Formel

$$R^2\text{—}\overset{\overset{\displaystyle R^1_{3-n}}{|}}{Si}\text{—}X_n \qquad \text{(Komponente a)}$$

mit

$R^1$ = Alkyl, Aryl, Acyl, Aralkyl mit 1 bis 10 Kohlenstoffatomen
$R^2$ = organischer Rest mit polymerisierbarer Doppelbindung
X = hydrolisierbare Gruppe
n = 1, 2 oder 3

eingesetzt. Die hydrolisierbare Gruppe X kann beispielsweise ein Halogenrest, ein Alkoxirest, ein Acyloxirest, ein Mercaptorest oder ein Alkenyloxirest sein.

Im folgenden werden geeignete Beispiele für die Silanmonomeren aufgeführt:

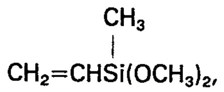

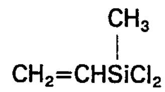

$CH_2=CHSi(OCH_3)_3$,

$CH_2=CHSiCl_3$,

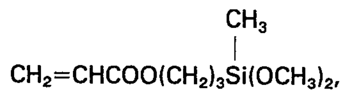

$CH_2=CHCOO(CH_2)_3Si(OCH_3)_3$,

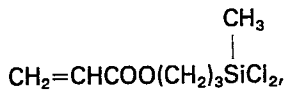

$CH_2=CHCOO(CH_2)_3SiCl_3$,

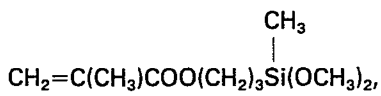

$CH_2=C(CH_3)COO(CH_2)_3Si(OCH_3)_3$,

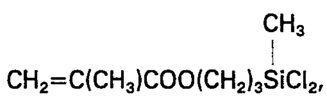

$CH_2=C(CH_3)COO(CH_2)_3SiCl_3$,

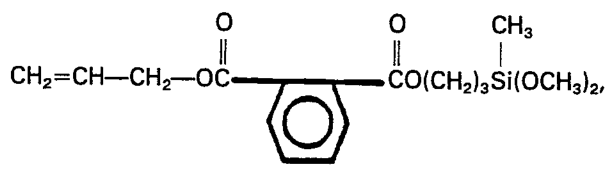

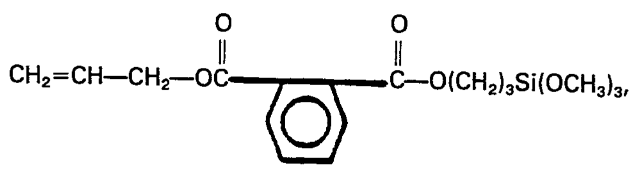

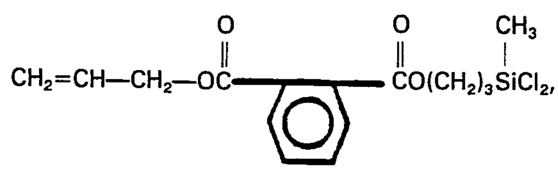

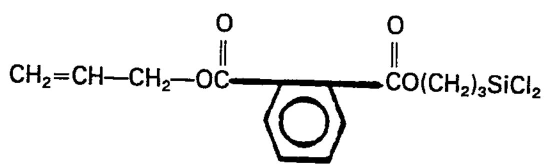

Besonders bevorzugt wird als Kompnente a)

γ — Methylacryloxypropyltrimethyoxysilan

eingesetzt.

Als komponente b) können vorteilhaft Verbindungen der allgemeinen Formel

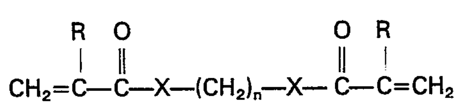

mit

R = H, $CH_3$ oder Alkyl

X = O, NH, S

n = 2 bis 8

verwendent werden. Beispiele für derartige Verbindungen sind Hexandioldiacrylat, Hexandioldimethacrylat, Glykoldiacrylat, Glykoldimethacrylat, Butandioldiacrylat, Butandioldimethacrylat, Trimethylolpropantriacrylat und Trimethylolpropantrimethacrylat. Des weiteren ist auch Divinylbenzol als Komponente b) geeignet. Selbstverständlich können auch Kombinationen dieser mehrfach ungesättigten Monomeren verwendet werden.

Weiterhin kann die Komponente b) vorteilhaft eine mit einem ungesättigten, eine polymerisierbare Doppelbindung enthaltenden Alkohol veresterte Polycarbonsäure oder ungesättigte Monocarbonsäure sein.

Ferner kann vorteilhaft als Komponente b) ein Umsetzungsproduktsprodukt eines Polyisocyanats und eines ungesättigten Alkohols oder eines Amins verwendet werden. Als Beispiel hierfür sei das Reaktionsprodukt aus einem Mol Hexamethylendiisocyanat und zwei Mol Allylalkohol oder das Reaktionsprodukt aus Isophorondiisocyanat und Hydroxyethylacrylat genannt.

Eine weitere vorteilhafte Komponente b) ist ein Diester von Polyethylenglykol und/oder Polypropylenglykol mit einem mittleren Molekulargewicht von weniger als 1500, bevorzugt weniger als 1000, und Acrylsäure und/oder Methacrylsäure.

Als Komponente b) kommen weiterhin Umsetzungsprodukte aus einer Carbonsäure mit einer polymerisierbaren, olefinisch ungesättigten Doppelbindung und Glycidylacrylat und/oder Glycidylmethacrylat sowie Umsetzungsprodukte von Dicarbonsäure mit Glycidylacrylat und/oder Glycidylmethacrylat in Frage. Derartige mehrfach ethylenisch ungesättigte Monomere sollten erfindungsgemäß jedoch nur in kleinen Anteilen eingesetzt werden, das sie Hydroxylgruppen enthalten, die mit den Silanmonomeren (a) reagieren können. Dies gilt auch für mehrfach ethylenisch ungesättigte Monomere, die aus Diepoxidverbindungen und ethylenisch ungesättigten Monomeren mit einer primären oder sekundären Aminogruppe gebildet werden, da diese Produkte ebenfalls Hydroxylgruppen enthalten.

Die Auswahl der ethylenisch ungesättigten Neutralmonomere (Komponente c) ist nicht besonders kritisch. Diese können augewählt sein aus der Gruppe Styrol, Vinyltoluol, Alkylester der Acrylsäure und der Methacrylsäure, Alkoxiethylacrylate und Aryloxiethylacrylate und die entsprechenden Methacrylate sowie Ester der Malein- und Fumarsäure. Beispiele hierfür sind Methylacrylat, Ethylacrylat, Propylacrylat, Butylacrylat, Isopropylacrylat, Isobutylacrylat, Pentylacrylat, Isoamylacrylat, Hexylacrylat, 2-Ethylhexylacrylat, Octylacrylat, 3,5,5-Trimethylhexylacrylat, Decylacrylat, Dodecylacrylat, Hexadecylacrylat, Octadecylacrylat, Octadecenylacrylat, Pentylacrylat, Isoamylmethacrylat, Hexylmethacrylat, 2-Ethylbutylmethyacrylat, Octylmethacrylat, 3,5,5-Trimethylhexylmethacrylat, Decylmethacrylat, Dodecylmethacrylat, Hexadecylmethacrylat, Octadecylmethacrylat, Butoxiethylacrylat, Butoxiethylmethacrylat, Methlmethacrylat, Ethylmethacrylat, Propylmethacrylat, Isopropylmethacrylat, Butylmethacrylat, Cyclohexylacrylat, Cyclohexylmethacrylat, Acrylnitril, Methacrylnitril, Vinylacetat, Vinylchlorid und Phenoxiethylacrylat. Weitere Monomere können eingesetzt werden, sofern sie nicht zu unerwünschten Eigenschaften des Copolymerisats führen.

Um eine schnellere Wasseraufnahme bei der Vernetzung unter dem Einfluß von Luftfeuchtigkeit zu ermöglichen, ist es besonders vorteilhaft, wenn als zusätzliches Comonomer d) zu den ethylenisch ungesättigten Monomeren a), b) und c) bis zu 10 Gew.%, bezogen auf die Summe von a) bis d), eines ethylenisch ungesättigten Carbonsäureamids verwendet werden.

Geeignete Komponenten d) sind beispielsweise Acrylsäureamid, Methacrylsäureamid, Itakonsäurediamid, α-Ethylacrylamid, Crotonsäureamid, Fumarsäureamid und Maleinsäurediamid.

Ggf. können bis zu 5 Gew.% auch ethylenisch ungesättigte Monomere mit einer Hydroxygruppe, einer Carboxylgruppe oder einer Aminogruppe mit verwendet werden (Komponente e). Beispiele für Hydroxylgruppen enthaltende ethylenisch ungesättigte Monomere sind Hydroxylalkylester der Acrylsäure und/oder Methacrylsäure, z.B. Hydroxyethylacrylat, Hydroxyproylacrylat, Hydroxybutylacrylat, Hydroxyamylacrylat, Hydroxyhexylacrylat, Hydroxyoctylacrylat und die entsprechenden Methacrylate. Als Komponente e) kann auch ein Umsetzungsprodukt aus einem Mol Hydroxyethylacrylat und/oder Hydroxyethylmethacrylat und durchschnittlich 2 Mol ε-Caprolacton sein. Als Komponente e) kann auch ein hydroxylgruppenhaltiger Ester der Acrylsäure oder der Methacrylsäure mit einer sekundären Hydorxylgruppe sein, wie beispielsweise 2-Hydroxypropylacrylat, 2-Hydroxybutylacrylat, 3-Hydroxybutylacrylat und die entsprechenden Methacrylate. Als Hydroxylgruppen enthaltendes polymerisierbares Monomer ist auch ein Umsetzungsprodukt aus Acrylsäure und/oder Methacrylsäure mit dem Glycidylester einer Carbonsäure mit einem tertiären α-Kohlenstoffatom geeignet. Beispiele für ethylenisch ungesättigte Monomere mit einer Carboxylgruppe sind Methacrylsäure und Acrylsäure. Ein geeignetes ethylenisch ungesättigtes Monomere mit einer Aminogruppe ist N-tert.-Butylaminoethylacrylat.

Die Copolymerisationsreaktionen zur Herstellung der erfindungsgemäßen Polymerisate werden unter Verwendung von mindestens 2 Gew.%, bezogen auf das Gesamtgewicht der ethylenisch ungesättigten Monomeren, eines Polymerisationsreglers ohne aktive OH- oder NH-Gruppen ausgeführt, wobei borzugsweise Mercaptosilane als Regler verwendet werden. Es ergibt sich, daß des öfteren nur bestimmte Regler für bestimmte Kombinationen der zu polymerisierenden Monomeren a) bis e) geeignet sind.

Werden beispielsweise als Komponente b) Diacrylate bzw. Dimethacrylate der allgemeinen Formel

$$CH_2{=}\overset{\overset{\displaystyle R}{|}}{C}-\overset{\overset{\displaystyle O}{\|}}{C}-X-(CH_2)_n-X-\overset{\overset{\displaystyle O}{\|}}{C}-\overset{\overset{\displaystyle R}{|}}{C}{=}CH_2$$

mit
R = H, $CH_3$ oder Alkyl
X = O, NH, S
n = 2 bis 8
in einem Anteil von mehr als 10 Gew.%, bezogen auf das Gesamtgewicht aller Monomeren, polymerisiert, sollte die Polymerisation unter Verwendung von mehr als 5 Gew.%, bezogen auf das Gesamtgewicht der Monomeren, Mercaptoethyltriethoxysilan und/oder Mercaptopropylmethyldimethoxysilan, ggf. zusammen mit anderen Mercaptoverbindungen, in einem Temperaturbereich zwischen 100°C und 120°C ausgeführt werden.

Werden die zuvor genannten, mehrfach ethylenisch ungesättigten Acrylat- bzw. Methacrylatverbindungen in einem Anteil von mindestens 15 Gew.%, bezogen auf das Momerengewicht, copolymerisiert, sollten als Monomere ohne Gruppen mit aktivem Wasserstoff (Komponente c)) vorwiegend Acrylatmonomere und/oder Methacrylatomomere und/oder Maleinsäure- und/oder Fumarsäureester verwendet werden. Die Copolymerisation sollte in Gegenwart von mehr als 6 Gew.%, bezogen auf das Monomerengewischt, eines Mercaptosilans, bevorzugt Mercaptoethyltriethoxysilan oder Mercaptopropylmethyldimethoxysilan, ggf. zusammen mit anderen Mercaptoverbindungen, ausgeführt werden.

Falls als Komponente b) mehr als 10 Gew.% Divinylaromaten, wie biespielsweise Divinylbenzol, zusammen mit dem Monomeren a), c), ggf. d) und ggf. e) copolymerisiert werden, sollten als Regler vorzugsweise mehr als 10 Gew.% bezogen auf das Monomerengewicht, Mercaptoethyltriethoxysilan und/oder Mercaptopropylmethyldimethoxysilan eingesetzt werden, um eine Gelierung des Copolymerisats zu verhindern.

Die vorliegende Erfindung betrifft auch Verfahren zur Herstellung der zuvor genannten Silylgruppen enthaltenden Polymerisate.

Die vorliegende Erfindung betrifft auch ein Verfahren zur Herstellung eines Silylgruppen enthaltenden Polymerisats, wobei die Silylgruppen durch ethylenisch ungesättigte Monomere der allgemeinen Formel

$$R^2-\overset{\overset{\displaystyle R^1{}_{3-n}}{|}}{Si}-X_n \qquad (a)$$

mit
$R^1$ = Alkyl, Aryl, Acyl, Aralkyl mit 1 bis 10 Kohlenstoffatomen
$R^2$ = organischer Rest mit polymerisierbarer Doppelbindung
X = hydrolisierbare Gruppe
n = 1, 2 oder 3
in das Polymerisat eingebracht werden, das dadurch gekennzeichnet ist, daß zu seiner Herstellung
a) 0,1 bis 40 Gew.% der Silanmonomeren (a),
b) 5 bis 30 Gew.%, bevorzugt 8 bis 25 Gew.%, Monomere mit mindestens zwei polymerisierbaren ethylenisch ungesättigten Doppelbindungen und
c) 30 bis 90 Gew.% ethylenisch ungesättigte Neutralmonomere
wobei die Summe von a), b) und c) 100 Gew.% beträgt, in einem organischen Lösungsmittel unter Verwendung von Initiatoren und unter Verwendung von mindestens 2 Gew.%, bezogen auf das Gesamtgewicht der Monomeren, Polymerisationsreglern ohne OH- und NH-Gruppen bei 80°C bis 130°C, vorzugsweise bei 90°C bis 120°C, copolymerisiert werden.

Beispiele für geeignete ethylenisch ungesättigte Monomere a) bis c) sowie für die ggf. zusätzlich zu verwendenden Monomeren d) und e) sind die zuvor genannten Beispiele für die Komponenten a) bis e) des beschriebenen Silylgruppen enthaltenden Polymerisats.

Durch geeignete Polymersationsbedingungen läßt sich ein vorvernetztes, aber nicht geliertes Copolymerisat erhalten.

Als Initiatoren kommen vorzugsweise Azoinitiatoren, wie beispielsweise Azobisiobutyronitril in Frage. Bei niederigem Anteil am eingesetzten mehrfach enthlenisch ungesättigten Monomeren (Komponente b)) können auch Peroxyester als Initiatoren verwendet werden. Als Beispiel hierfür sei tert.-Butylperoxy-2-ethylhexanoat genannt. Selbstverständlich können auch Azo-Initiatoren mit reaktiven Silicongruppen verwendet werden. Diese werden in einem Anteil von 0,01 bis 20 Gew.-Teilen pro 100 Gew.-Teile der polymeriserbaren Monomeren eingesetzt.

Beispiele für einsetzbare reaktive Silicongruppen enthaltende Azoinitiatoren finden sich in EP—A—159 715 und EP—A—159 716.

Als Polymerisationsregler werden vorzugsweise Mercaptosilane oder Mischungen von Mercaptosilanen mit anderen Mercaptoverbindungen verwendet. Dabei kommen nur solche Mercaptoverbindungen in Frage, die nicht mit Silylgruppen reagieren, d.h. die keine OH- oder NH-Gruppen besitzen. Beispiele für geeignete, als Polymerisationsregler einsetzbare Mercaptosilane werden im folgenden aufgeführt:

$$(CH_3O)_2(CH_3)SiCH_2CH_2CH_2SH$$

$$(CH_3CH_2O)_3SiCH_2CH_2SH$$

$$(CH_3O)_3SiCH_2CH_2CH_2SH,$$

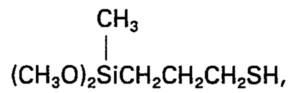

$$(CH_3CH_2O)_3SiCH_2CH_2CH_2SH,$$

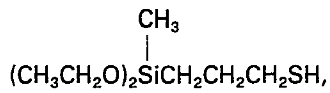

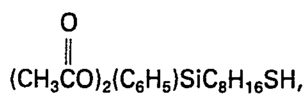 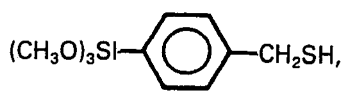

$Cl(CH_3)_2SiCH_2SH$, 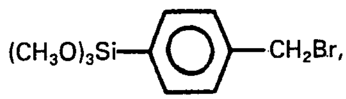

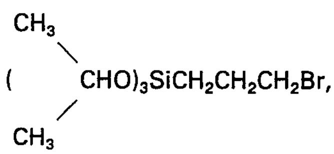 $[(CH_3O)_3SiCH_2CH_2CH_2S—]_2$, 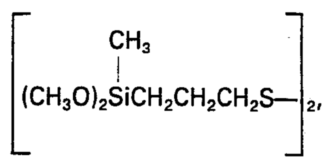

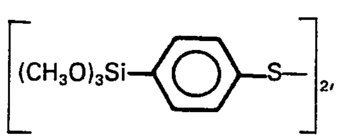 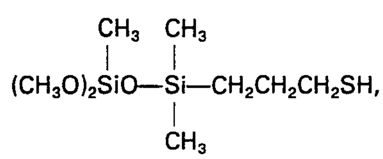

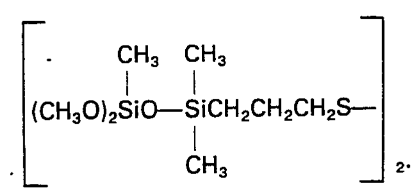

Beispiele für andere Mercaptoverbindungen sind ein n- oder t-Dodecylmercaptan.

Bei den Mercaptosilanen treten Reaktivitätsunterschiede auf. Besonders bevorzugt wird Mercaptoethyltriethyloxysilan als Polymerisationsregler eingesetzt.

Vorteilhafterweise werden die Polymerisationsregler in eninem Anteil von mindestens 4 Gew.%, bezogen auf das Gesamtgewicht der Monomeren, eingesetzt.

Die radialkalische Polymerisation wird bei Temperaturen von 80—130°C, vorzugsweise bei 90—120°C, durchgeführt. Vorteilhafterweise wird die radikalische Polymerisation zur Herstellung des Silylgruppen enthaltenden Polymerisats so durchgeführt, daß eine Lösung des Polymerisats mit einem Festkörper-Gehalt von 40—65 Gew.% resultiert.

Als Löungsmittel für die radialkalische Polymerisation kommen nichtreaktive Lösungsmittel, wie beispielsweise Ester, Ether, Kohlenwasserstoffe, Alkohole und Ketone, in Frage.

Die vorliegende Erfindung betrifft auch durch Feuchtigkeit härtbare Überzugsmittel, die das zuvor beschriebene Silylgruppen-enthaltende Polymerisat, organisches Lösungsmittel, ggf. Pigmente, Füllstoffe und übliche Hilfsstoffe und Additive sowie einen Vernetzungskatalysator enthalten. Ohne Zusatz eines Vernetzungskatalysators haben die Überzugszusammensetzungen eine genügend lange Topfzeit. Setzt man geeignete Vernetzungskatalysatoren zu, so härten die Überzugsammensetzungen mit Feuchtigkeit bei Raumtemperatur oder leicht erhöhter Temperature schnell aus.

Geeignete Vernetzungskatalysatoren sind beispielsweise Phosphorsäure, p-Toluolsulfonsäure, Zinndibutyldilaurat, Zinndioctyldilaurat, Amine, beispielsweise aliphatische Diamine, wie Ethylendiamin, Hexandiamin, aliphatische Polyamine, wie Diethylentriamin, Triethylentetramin, Tetraethylenpentamin, alicyclische Amine, wie Piperidin, Piperazin, aromatische Amine, Ethanolamin, Triethylamin, weiterhin Alkali-Katalysatoren, wie beispielsweise Kaliumhydroxyd oder Natriumhydroxyd. Vorteilhafterweise werden 0,01 bis 10 Gew.-Teile des Katalysators auf 100 Gew.-Teile des Polymeren verwendet.

Als organsiche Zinnverbindungen, die als Vernetzungskatalysatoren einsetzbar sind, seien weiterhin Verbindungen mit Zinn-Schwefel-Einfach- oder Doppelbindungen genannt, wie z.B.

$(n\text{-}C_4H_9)_2$ Sn($SCH_2$ COO),
$(n\text{-}C_8H_{17})_2$ Sn($SCH_2CH_2COO$),
$(n\text{-}C_8H_{17})_2$ Sn($SCH_2COO$ $CH_2$ $CH_2$ OCO $CH_2S$),
$(n\text{-}C_8H_{17})_2$ Sn($SCH_2$ COO $CH_2$ $CH_2$ $CH_2$ $CH_2$ OCO $CH_2S$).
(n-$C_4H_9$ Sn($SCH_2$ COO $C_8H_{17}$-iso$)_2$,
$(n\text{-}C_8H_{17})_2$ Sn($SCH_2$ COO $C_{12}H_{25}$-n$)_2$,
$(n\text{-}C_4H_9)_2$ Sn($SCH_2$ COO $C_8H_{17}$-iso$)_2$ und
$(n\text{-}C_8H_{17})_2$ Sn = S.

Es sind auch Mischungen der obengenannten Zinn-Schwelfel-Verbindungen mit Zinn-Verbindunden, wie beispielsweise mit Dialkylzinndimaleaten, zur Katalysierung geeignet.

Weitere ebenfalls geeignete Katalysatoren finden sich in EP—A—48461 und in EPA—A—63753.

Die Erfindung betrifft auch Verfahren zur Herstellung der zuvor beschriebenen Überzugsmittel, die dadurch gekennzeichnet sind, daß das Silylgruppen enthaltende Polymerisat, organisches Lösungsmittel, ggf. Pigmente, Füllstoffe und Additive durch Mischen und ggf. Dispersigeren zu einer Überzugsmasse verarbeitet werden und kurz vor der Anwendung ein Vernetzungskatalysator zugemischt wird.

Aufgrund der niedrigen Härtungstemperaturen sind die beschriebenen Überzugsmittel insbesondere geeignet für die Reparaturlackierung von Autokarossen.

Die erfindungsgemäßen Überzugsmittel sind ebenfalls hervorragend geeignet als Pigmente und/oder Metallpigmente enthaltende Basislacke oder als Decklacke oder als Basis- und als Decklacke einer Mehrschichtlackierung, welche ggf. nach dem Zweischicht-in-naß-Verfahren aufgetragen werden können.

Die beschriebenen Überzugsmittel weisen verbesserte Eigenschaften in bezug auf Benzinfestigkeit und in bezug auf Beständigkeit gengenüber langfristiger Belastung durch Wasser bzw. Wasserdampf verglichen mit bekannten Siliconmodifizierten Copolymerisaten auf.

Nachfolgend wird die Erfindung anhand von Ausführungsbeispielen näher erläutert:

A) Herstellung der erfindungsgemäßen Copolymerisate

In den folgenden Beispielen beziehen sich, wenn nicht anders angegeben, alle Prozentangaben auf Gewichtsteile. Die Festkörperwerte wurden in einem Umluftofen bestimmt nach 2 Stunden bei 100°C. Die Viskositäten wurden auf einem Kegel-Platte-Viskosimeter (ICI-Viskosimeter) bei 23°C bestimmt.

Die Anteile der einzelnen Monomeren, Lösemittelmengen, Initiator- und Regelermengen sowie Polymerisationstemperatur und Bindemitteldaten sind aus der Tabelle I ersichtlich. Die Herstellung der Acrylate erfolgte in Standardapparaten (2 Liter Glasreaktoren) mit Rührer, Rückflußkühler, Zulaufgefäßen. Als Lösemittel wurde eine 1:1-Mischung auz Xylol und 1-Methoxypropyl-2-acetat verwendet. Das Lösemittelgemisch wurde vorgelegt, ein Teil wurde zum Lösen des Initiators verwendet. An Initiatoren wurden 2,2′-azobis(isobutyronitril) = I1 und 2,2′-azobis)-methylbutyronitril) = I2 verwendet. An Polymerisationsreglern wurden eingesetzt:

Mercaptoethyltrisethoxysilan = R1
Mercaptopropyltrimethoxysilan = R2
Mercaptopropylmethyldimethoxysilan = R3

Das Lösenmittelgemisch wurde auf die angegebene Polymerisationstemperatur aufgeheizt, die Temperatur wurde während der ganzen Polymerisationszeit gehalten. Die angegebenen Monomerenmischungen (incl. Regler) und Initiatorlösungen wurden getrennt zudosiert.

Die Zulaufzeiten betrugen bei der Monomerenmischung (incl. Regler) 3 Stunden, bei der Initiatorlösung 3,5 Stunden, bei Beispiel 5 wurden der Initiatorzulauf 10 Minuten nach dem Monomerenzulauf gestartet, ansonsten wurde mit den beiden Zuläufen gleichzeitig begonnen; der Zulauf erfolgte gleichmäßig über die angegebene Zeit, nach Ende des Initiatorzulaufs wurde noch 2 Stunden bei der angegebenen Polymerisationstemperatur nachpolymerisiert. Die Mengen an Monomeren, Lösemittel etc. sind in T = Gewichtsteilen angegeben.

TABELLE I

| Beispiel Nr. | 1 | 2 | 3 | 4 | 5 | 6 |
|---|---|---|---|---|---|---|
| Lösemittelvorlage | 389,6T | 360,8T | 348,8T | 348,8T | 572,4 | 607,0T |
| γ-Methacryloxy-propyltrimethoxysilan | 180,0T | 180,0T | 180,0T | 180,0T | 180,0T | 96,0T |
| Hexandioldiacrylat | 120,0T | 120,0T | 120,0T | 120,0T | 90,0T | — |
| Divinylbenzol (64%ig in Ethylstyrol) | — | — | — | — | — | 84,0T |
| Methylmethacrylat | 180,0T | 180,0T | 180,0T | 60,0T | 90,0T | 180,0T |
| tert.-Butylacrylat | 120,0T | 120,0T | 120,0T | 60,0T | 60,0T | — |
| Styrol | — | — | — | 120,0T | 120,0T | — |
| n-Butylacrylat | 60,0T | 60,0T | 60,0T | 60,0T | 60,0T | — |
| 2-Ethylhexylacrylat | — | — | — | — | — | 120,0T |
| Cyclohexylmethacrylat | — | — | — | — | — | 120,0T |
| Regler | 88,8R2 | 60,0R1 | 48,0R2 | 57,0R2 | 54,0R2 | 90,0R1 |
| Initiator | 20,4 I1 | 20,4 I1 | 20,4 I1 | 20,4 I1 | 20,4 I2 | 21,0 I2 |
| Lösemittel für Init. | 319,6T | 319,6T | 319,6T | 319,6T | 102,0T | 104,0T |
| Polymerisationstemp. | 110°C | 100°C | 100°C | 100°C | 100°C | 90°C |
| Festkörper | 48,5% | geliert | 49,6% | geliert | 48,5% | 48,7% |
| Visk. (dPa.s) | 0,3 | | 2,2 | | 1,4 | 1,9 |

Die Acrylatharze aus den Beispielen 3 und 6 wurden durch Abdestillieren von Lösemittelgemisch auf einen Festkörper von 64,4 (3) und von 59,8% (6) aufkozentriert und in dieser Form in den Lacken eingesetzt.

Die Copolymerisate der Beispiele 6, 8, 10 wurden mittels Gelpermeationschromatographie untersucht. Es wurden folgende Werte erhalten:

| Beispiel | $\overline{M}_n$ | $\overline{M}_w$ | $D = \frac{\overline{M}_w}{\overline{M}_n}$ |
|---|---|---|---|
| 6 | 2 830 | 60 000 | 21,2 |
| 8 | 3 000 | 80 000 | 26,3 |
| 10 | 3 500 | 95 000 | 26,9 |

| Beispiel Nr. | 7 | 8 | 9 | 10 | 11 |
|---|---|---|---|---|---|
| Lösemittelvorlage | 637,0T | 621,4T | 566,6T | 557,2T | 519,3T |
| γ-Methacryloxy-propyltrimethoxysilan | 60,0T | 60,0T | 180,0T | 180,0T | 180,0T |
| Hexandioldiacrylat | — | — | 120,0T | 120,0T | 120,0T |
| Divinylbenzol (64%ig in Ethylstryol) | 120,0T | 120,0T | — | — | — |
| Methylmethacrylat | 180,0T | 180,0T | 120,0T | 120,0T | 120,0T |
| tert.-Butylacrylat | — | — | 120,0T | 108,0T | 84,0T |
| n-Butylacrylat | — | — | 60,0T | 60,0T | 60,0T |
| 2-Ethylhexylacrylat | 120,0T | 120,0T | — | — | — |
| Cyclohexylmethacrylat | 120,0T | 120,0T | — | — | — |
| Acrylamid | — | — | — | 12,0T | — |
| Acrylsäure/Card. Addukt (48,8%ig in Toluol)* | — | — | — | — | 73,5T |
| Regler | 90,0R1 | 104,4R3 | 38,4R3 | 38,4R3 | 38,4R3 |
| Initiator | 21,0 I2 | 21,0 I2 | 20,4 I2 | 20,4 I2 | 20,4 I2 |
| Lösemittel für Init. | 104,0T | 104,0T | 102,0T | 102,0T | 102,0T |
| Polymerisationstemp. | 90°C | 90°C | 110°C | 110°C | 110°C |
| Festkörper | geliert | 49% | 49% | 49,5% | 50,1% |
| Viskosität (dPa.s) | | 2,0 | 1,55 | 2,8 | 3,8 |

*Das Acylsäure/Cardura E 10-Addukt wurde wie folgt hergestellt:

750 Teile Cardura E 10 (Glycidylester einer verzweigten C-10-Carbonsäure) und 988 Teile Toluol wurden zusammen mit 0,988 Teilen Hydrochinon auf 100°C aufgeheizt, innerhalb 30 Minuten wurden 238 Teile Acrylsäure zudosiert. Es wurde bei 100°C gehalten, 2,5 Stunden nach der Acrylsäure-Zugabe wurde 1 Teil eines Chromsalzkomplexes zugegeben, nach weiteren 5 Stunden bei 100°C wurden nochmals 0,1 Teile eines Chromsalzkomplexes zugegeben, nach weitern 5 Stunden war eine Säurezahl von 18,5 (mg KOH) erreicht. Das Produkt hatte einen Festkörper von 48,4%.

B) Herstellung erfindungsgemäßer Lacke

Kalarlackzusammensetzung[1)]

| | Lack 1 | Lack 2 |
|---|---|---|
| Acrylatharz aus Beispiel 6 | 76 | |
| Acrylatharz aus Beispiel 3 | — | 47 |
| Acrylatharz aus Beispiel 1 | — | 27 |
| Polysiloxan-polyether-Lösung (0,006%) | 4 | 4 |
| Lichtschutzmittel (HALS-Produkt)[2)] | 1,2 | 1,2 |
| UV-Absorber (Oxalanilid)[3)] | 1 | 1 |
| Butylglykolacetat | 2 | 2 |
| Butylacetate | 14,3 | 16,3 |
| Dibutyl-zinn-dilaurat-Lösung (10%ig in Xylol) | 1,5 | 1,5 |
| | 100,0 | 100,0 |
| Lackverdunnung[4)] | 27 g | 11 g |
| Spritzviskosität (DIN 4-Becher) | 18 s | 18 s |
| Verarbeitungs-Festkörper (1h/130°C) | 36,5% | 40% |

1) Die Positionen werden nacheinander mit einem Dissolver verrührt.
2) Tinuvin 292, Ciba Geigy.
3) Sanduvor VSU, Sandoz AG.
4) Xylol/Butylacetat/Methoxy-propylacetate 1/1/1.

TABELLE 2

Eigenschaftsniveau der Klarlacke[1]

| | | Lack 1 RT | Lack 1 30'/60°C | Lack 1 20'/80°C | Lack 2 RT | Lack 2 30'/60°C | Lack 2 20'/80°C |
|---|---|---|---|---|---|---|---|
| Pendelhärte nach König | 24 h | 35 | 64 | 70 | 10 | 11 | 11 |
| (DIN 53 157) | 168 h | 130 | 153 | 154 | 71 | 76 | 80 |
| (gemessen auf Glas, 49µm) | 336 h | 134 | 167 | 171 | 136 | 154 | 154 |
| Berührtrocken nach | | 4h | Ofen | Ofen | 8 | 6 | 6 |
| Abklebetest[2] | 24 h | leichte Markierung | i.O. | i.O. | leichte Markierung | i.O. | i.O. |
| Superbenzinbeständigkeit[3] n. | 14 Tg. | i.O. | 1.O. | i.O. | leichte Markierung | i.O. | i.O. |
| Glanz (20°) | | 78% | 82% | 84% | 70% | 75% | 75% |
| Erichsen-Tiefung (mm) (DIN 53 156) | | 5 | 5 | 5 | 6 | 6 | 6 |
| Volvo-Test (10 Runden)[4] | | i.O. | i.O. | i.O. | Blasen | Blasen | i.O. |
| Verarbeitungs-Festkörper (18 s DIN-4-Becher) | | 36,5% | | | 40% | | |

[1] Die Klarlacke wurden in einer Schichtstärke von 50 µm auf einen Polyester/Melamin/Aluminium-Flitter-Basislack appliziert.

[2] Tesakrepp 4330 wird auf den Film aufgeklebt und nach 1 h wieder entfernt; Beurteilung nach Markierung.

[3] Handelsübliches Superbenzin.

[4] 1 Runde: 4 h Lagerung bei 50°C, 2 h bei 35°C und 100% rel. Luftfeuchtigkeit, 2 h 35°C bei 100% rel. Luftfeuchtigkeit + 2 l $SO_2$ auf 300 l Luft, 16 h Lagerung −30°C.

**Patentansprüche**

1. Silylgruppen enthaltendes Polymerisat, wobei die Silylgruppen durch ethylenisch ungesättigte Monomere der allgemeinen Formel

$$R^2-\overset{\displaystyle R^1_{3-n}\atop |}{Si}-X_n \qquad (a)$$

mit

$R^1$ = Alkyl, Aryl, Acyl, Aralkyl mit 1 bis 10 Kohlenstoffatomen
$R^2$ = organischer Rest mit polymerisierbarer Doppelbindung
X = hydrolisierbare Gruppe
n = 1, 2 oder 3

in das Polymerisat eingebracht werden, dadurch gekennzeichnet, daß das Polymerisat erhältlich ist durch Copolymerisation von

a) 0,01 bis 40 Gew.% der Silanmonomeren (a),
b) 5 bis 30 Gew.%, bevorzugt 8 bis 25 Gew.%, Monomeren mit mindestens 2 polymerisierbaren ethylenisch ungesättigten Doppelbindungen und
c) 30 bis 90 Gew.% ethylenisch ungesättigten Monomeren ohne Gruppen mit aktivem Wasserstoff, wobei die Summe von a), b) und c) 100 Gew.% beträgt.

2. Verfahren zur Herstellung eines Silylgruppen-enthaltenden Polymerisats, wobei die Silylgruppen durch ethylenisch ungesättigte Monomere der allgemeinen Formel

$$R^2-\overset{\displaystyle R^1_{3-n}\atop |}{Si}-X_n \qquad (a)$$

mit

$R^1$ = Alkyl, Aryl, Acyl, Aralkyl mit 1 bis 10 Kohlenstoffomen
$R^2$ = organischer Rest mit polymerisierbarer Doppelbindung
X = hydrolisierbare Gruppe
n = 1, 2 oder 3

in das Polymerisat eingebracht werden, dadurch gekennzeichnet, daß zu seiner Herstellung

a) 0,01 bis 40 Gew.% der Silanmonomeren (a),
b) 5 bis 30 Gew.%, bevorzugt 8 bis 25 Gew.%, Monomere mit mindestens 2 polymerisierbaren ethylenisch ungesättigten Doppelbindungen und
c) 30 bis 90 Gew.% ethylenisch ungesättigten Monomeren ohne Gruppen mit aktivem Wasserstoff, wobei die Summe von a), b) und c) 100 Gew.% beträgt, in einem organischen Lösungsmittel unter Verwendung von Initiatoren und unter Verwendung von mindestens 2 Gew.% bezogen auf das Gesamtgewicht der Monomeren, eines Polymerisationsreglers ohne OH- und NH-Gruppen bei 80°C bis 130°C, vorzugsweise bei 90°C bis 120°C, copolymerisiert werden.

3. Polymerisat oder Verfahren nach Anspruch 1 oder 2, dadurch gekennzeichnet, daß als Komponente a)

γ-Methacryloxypropyltrimethoxysilan

verwendet wird.

4. Polymerisat oder Verfahren nach Anspruch 1 bis 3, dadurch gekennzeichnet, daß die Komponente b) der allgemeinen Formel

$$CH_2=\overset{\displaystyle R\atop |}{C}-\overset{\displaystyle O\atop \|}{C}-X-(CH_2)_n-X-\overset{\displaystyle O\atop \|}{C}-\overset{\displaystyle R\atop |}{C}=CH_2$$

mit

R = H, $CH_3$ oder Alkyl
X = O, NH, S
n = 2 bis 8

entspricht.

5. Polymerisat oder Verfahren nach Anspruch 1 bis 4, dadurch gekennzeichnet, daß die Komponente b) eine mit einem ungesättigten, eine polymerisierbare Doppelbindung enthaltenen Alkohol veresterte Polycarbonsäure oder ungesättigte Monocarbonsäure ist.

6. Polymerisat oder Verfahren nach Anspruch 1 bis 5, dadurch gekennzeichnet, daß die Komponente b) ein Umsetzungsprodukt eines Polyisocyanats und eines ungesättigten Alkohols oder eines ungesättigten Amins ist.

7. Polymerisat oder Verfahren nach Anspruch 1 bis 6, dadurch gekennzeichnet, daß die Komponente b) ein Diester von Polyethylenglykol und/oder Polypropylenglykol mit einem mittleren Molekulargewicht von weniger als 1.500, bevorzugt weniger als 1.000, und Acrylsäure und/oder Methacrylsäure ist.

8. Polymerisat oder Verfahren nach Anspruch 1 bis 7, dadurch gekennzeichnet, daß zusätzlich zu den ethylenisch ungesättigten Monomeren a), b) und c) bis zu 10 Gew.% eines ethylenisch ungesättigten Carbonsäureamids d), wobei die Summe von a), b), c) und d) 100 Gew.% beträgt, verwendet werden.

9. Polymerisat oder Verfahren nach Anspruch 1 bis 8, dadurch gekennzeichnet, daß zusätzlich zu den ethylenisch ungesättigten Monomeren a), b), c) und ggf. d) bis zu 5 Gew.% e) ethylenisch ungesättigte Monomere mit einer Hydroxyl-, Carboxyl- oder Aminogruppe verwendet werden, wobei die Summe von a), b), c), ggf. d) und e) 100 Gew.% beträgt.

10. Polymerisat oder Verfahren nach Anspruch 4, dadurch gekennzeichnet, daß mehr als 10 Gew.% der Monomeren b) verwendet werden und ggf. noch bis zu 10 Gew.% eines ethylenisch ungesättigten Carbonsäureamids (d) und ggf. bis zu 5 Gew.% ethylenisch ungesättigte Monomere mit einer Hydroxyl-, Carboxyl- oder Aminogruppe (e) copolymerisiert werden, wobei die Summe von a), b), c), ggf. d) und ggf. e) 100 Gew.% beträgt, und die Copolymerisation unter Verwendung von mehr als 5 Gew.%, bezogen auf das Gesamtgewicht der Monomeren, Mercaptoethyltriethoxysilan und/oder Mercaptopropylmethyldimethoxysilan, ggf. zusammen mit anderen Mercaptoverbindungen bei einer Temperatur zwischen 100°C und 120°C ausgeführt wird.

11. Polymerisat oder Verfahren nach Anspruch 4, dadurch gekennzeichnet, daß die ethylenisch ungesättigten Monomeren der Komponente b) in einem Anteil von mindestens 15 Gew.% eingesetzt werden, als Komponente c) vorwiegend Acrylat- und/oder Methacrylatmonomere und/oder Maleinsäure- und/oder Fumarsäureester eingesetzt werden, wobei die Summe aller ethylenisch ungesätigten Monomeren 100 Gew.% beträgt, und die Copolymerisation unter Verwendung von mehr als 6 Gew.%, bezogen auf das Monomerengewicht, eines Mercaptosilans, bevorzugt Mercaptoethyltriethoxysilan oder Mercaptopropylmethyldimethoxysilan, ggf. zusammen mit anderen Mercaptoverbindungen, ausgeführt wird.

12. Polymerisat oder Verfahren nach Anspruch 1 oder 2, dadurch gekennzeichnet, daß als Komponente b) mehr als 10 Gew.% Divinylaromaten eingesetzt werden und die Polymerisation unter Verwendung von mehr als 10 Gew.%, bezogen auf das Monomerengewicht, Mercaptoethyltriethoxysilan und/oder Mercaptopropylmethyldimethoxysilan ausgeführt wird.

13. Verfahren nach Anspruch 2 bis 12, dadurch gekennzeichnet, daß als Initiatoren Azoverbindungen und/oder Peroxyester verwendet werden.

14. Verfahren nach Anspruch 2 bis 13, dadurch gekennzeichnet, daß als Polymerisationsregler Mercaptosilane, ggf. zusammen mit anderen Mercaptoverbindungen, verwendet werden.

15. Verfahren nach Anspruch 14, dadurch gekennzeichnet, daß als Polymerisationsregler Mercaptoethyltriethoxysilan verwendet wird.

16. Verfahren nach Anspruch 2 bis 15, dadurch gekennzeichnet, daß mindestens 4 Gew.%, bezogen auf das Gesamtgewicht der Monomeren, eines Polymerisationsreglers verwendet werden.

17. Verfahren nach Anspruch 2 bis 16, dadurch gekennzeichnet, daß die radikalische Polymerisation zur Herstellung des Silylgruppen-enthaltenden Polymerisats so durchgeführt wird, daß eine Lösung des Polymerisats mit einem Festkörper-Gehalt von 40—65 Gew.% resultiert.

18. Durch Feuchtigkeit härtbares Überzugsmittel, enthaltend das Silylgruppenenthaltende Polymerisat nach Anspruch 1 und 3 bis 12, organisches Lösungsmittel, ggf. Pigmente, Füllstoffe und übliche Hilfsstoffe und Additive sowie einen Vernetzungskatalysator.

19. Verfahren zur Herstellung eines Überzugsmittels enthaltend das nach den Verfahren nach Anspruch 2 bis 17 hergestellte Polymerisat, dadurch gekennzeichnet, daß das Silylgruppen-enthaltende Polymerisat, organisches Lösungsmittel, ggf. Pigmente, Füllstoffe und übliche Hilfsstoffe und Additive durch Mischen und ggf. durch Dispergieren zu einer Überzugsmasse verarbeitet werden und kurz vor der Anwendung einem Vernetzungskatalysator zugemischt wird.

20. Verwendung des Überzugsmittels nach Anspruch 18 für die Autoreparaturlackierung.

21. Verwendung des Überzugsmittels nach Anspruch 18 als Metallpigmente und/oder Pigmente enthaltender Basislack und/oder Decklack einer Mehrschichtlackierung.

**Revendications**

1. Polymère contenant des groupes silyle, où les groupes silyle sont introduits dans le polymère par des monomères à insaturation éthylénique de formule générale:

$$\begin{array}{c} R^1 3_{3-n} \\ | \\ R^2\text{—}Si\text{—}X_n \end{array} \qquad (a)$$

avec:

$R^1$ = alkyle, aryle, acyle, aralkyle ayant 1 à 10 atomes de carbone;
$R^2$ = reste organique avec double liaison polymérisable;

X = groupe hydrolysable;
n = 1, 2 ou 3,

caractérisé par le fait que le polymère peut être obtenu par copolymérisation de:

(a) 0,1 à 40% en poids des silanes monomères (a);

(b) 5 à 30% en poids, de préférence 8 à 26% en poids, de monomères ayant au moins 2 doubles liaisons d'insaturation éthylénique, polymérisables; et

(c) 30 à 90% en poids de monomères à insaturation éthylénique sans groupes à hydrogène actif, la somme de (a), (b) et (c) s'élevant à 100% en poids.

2. Procédé de fabrication d'un polymère contenant des groupes silyle, où les groupes silyle sont introduits dans le polymère par des monomères à insaturation éthylénique de formule générale:

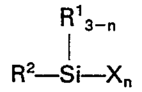
(a)

avec:
$R^1$ = alkyle, aryle, acyle, aralkyle ayant 1 à 10 atomes de carbone;
$R^2$ reste organique avec double liaison polymérisable;
X = groupe hydrolysable;
n = 1, 2 ou 3,

caractérisé par le fait que, pour sa préparation, on copolymérise:

(a) 0,1 à 40% en poids des silanes monomères (a);

(b) 5 à 30% en poids, de préférence 8 à 26% en poids, de monomères ayant au moins 2 doubles liaisons d'insaturation éthylénique, polymérisables; et

(c) 30 à 90% en poids de monomères à insaturation éthylénique sans groupes à hydrogène actif, la somme de (a), (b) et (c) s'élevant à 100% en poids, dans un solvant organique, avec utilisation d'initiateurs et avec utilisation d'au moins 2% en poids, par rapport au poids total des monomères, d'un régulateur de polymérisation sans groupes OH ni NH, à une température de 80°C à 130°C, de préférence, à une température de 90°C à 120°C.

3. Polymère ou procédé selon l'une des revendications 1 ou 2, caractérisé par le fait qu'on utilise, comme composant (a),

le γ-méthacryloxypropyltriméthoxysilane.

4. Polymère ou procédé selon l'une des revendications 1 à 3, caractérisé par le fait que le composant (b) correspond à la formule générale:

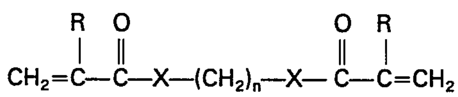

avec:
R = H, $CH_3$ ou alkyle;
X = O, NH, S;
n = 2 à 8.

5. Polymère ou procédé selon l'une des revendications 1 à 4, caractérisé par le fait que le composant (b) est un acide polycarboxylique ou un acide monocarboxylique insaturé, qui est estérifié par un alcool insaturé, contenant une double liaison polymérisable.

6. Polymère ou procédé selon l'une des revendications 1 à 5, caractérisé par le fait que le composant (b) est un produit de réaction d'un polyisocyanate et d'un alcool insaturé ou d'une amine insaturée.

7. Polymère ou procédé selon l'une des revendications 1 à 6, caractérisé par le fait que le composant (b) est un diester de polyéthylèneglycol et/ou de polypropylèneglycol ayant une masse moléculaire moyenne de moins de 1500, de préférence, de moins de 1000, et d'acide acrylique et/ou méthacrylique.

8. Polymère ou procédé selon l'une des revendications 1 à 7, caractérisé par le fait qu'en plus des monomères à insaturation éthylénique (a), (b) et (c), sont utilisés jusqu'à 10% en poids d'un amide d'acide carboxylique à insaturation éthylénique (d), la somme de (a), (b), (c) et (d) s'élevant à 100% en poids.

9. Polymère ou procédé selon l'une des revendications 1 à 8, caractérisé par le fait qu'en plus des monomères à insaturation éthylénique (a), (b), (c) et, le cas échéant, (d), sont utilisés jusqu'à 5% en poids de monomères à insaturation éthylénique (e) ayant un groupe hydroxyle, carboxyle ou amino, la somme de (a), (b), (c), le cas échéant (d), et (e) s'élevant à 100% en poids.

10. Polymère ou procédé selon la revendication 4, caractérisé par le fait que sont utilisés plus de 10% en poids des monomères (b), et, le cas échéant, sont copolymérisés encore jusqu'à 10% en poids d'un amide d'acide carboxylique à insaturation éthylénique (d) et, le cas échéant, jusqu'à 5% en poids de monomères à insaturation éthylénique (e) ayant un groupe hydroxyle, carboxyle ou amino, la somme de (a), (b), (c), le cas échéant (d), et le cas échéant (e), s'élevant à 100% en poids, et la copolymérisation est

effectuée à une température comprise entre 100°C et 120°C, avec utilisation de plus de 5% en poids, par rapport au poids total des monomères, de mercaptoéthyltriéthoxysilane et/ou de mercaptopropylméthyldiméthoxysilane, le cas échéant conjointement avec d'autres composés mercapto.

11. Polymère ou procédé selon la revendication 4, caractérisé par le fait que les monomères à insaturation éthylénique du composant (b) sont utilisés dans une fraction d'au moins 15% en poids, que sont utilisés, comme composant (c), de façon prépondérante des monomères de type acrylate et/ou méthacrylate et/ou des esters de l'acide maléique et/ou de l'acide fumarique, la somme de tous les monomères à insaturation éthylénique s'élevant à 100% en poids, et la copolymérisation est effectuée avec utilisation de plus de 6% en poids, par rapport au poids des monomères, d'un mercaptosilane, de préférence, d'un mercaptoéthyltriéthoxysilane ou d'un mercaptopropylméthyldiméthoxysilane, le cas échéant conjointement avec d'autres composés mercapto.

12. Polymère ou procédé selon l'une des revendications 1 ou 2, caractérisé par le fait que, comme composant (b), sont utilisés plus de 10% en poids de composés divinylaromatiques et que la polymérisation est effectuée avec utilisation de plus de 10% en poids, par rapport au poids des monomères, de mercaptotéthyltriéthoxysilane et/ou de mercaptopropylméthyldiméthoxysilane.

13. Procédé selon l'une des revendications 2 à 12, caractérisé par la fait qu'on utilise, comme initiateurs, des composés azoïques et/ou des peroxyesters.

14. Procédé selon l'une des revendications 2 à 13, caractérisé par le fait qu'on utilise, comme régulateurs de polymérisation, des mercaptosilanes, le cas échéant conjointement avec d'autres composés mercapto.

15. Procédé selon la revendication 14, caractérisé par le fait qu'on utilise le mercaptoéthyltriéthoxysilane comme régulateur de polymérisation.

16. Procédé selon l'une des revendications 2 à 15, caractérisé par le fait qu'on utilise au moins 4% en poids, par rapport au poids total des monomères, d'un régulateur de polymérisation.

17. Procédé selon l'une des revendications 2 à 16, caractérisé par le fait que l'on conduit la polymérisation radicalaire en vue de la préparation du polymère contenant des groupes silyle, de sorte qu'il en résulte une solution de polymère ayant une teneur en corps solides de 40—65% en poids.

18. Agent de revêtement durcissable par l'humidité, contenant le polymère à teneur en groupes silyle, tel que défini à l'une des revendications 1 et 3 à 12, un solvant organique, le cas échéant, des pigments, des charges et des adjuvants et additifs usuels, de même qu'un catalyseur de réticulation.

19. Procédé de fabrication d'un agent de revêtement contenant le polymère préparé par le procédé tel que défini à l'une des revendications 2 à 17, caractérisé par le fait que l'on transforme en une masse de revêtement, par mélange et, le cas échéant, par dispersion, le polymère contenant des groupes silyle, un solvant organique, le cas échéant, des pigments, des charges et des adjuvants et additifs usuels, et que, peu de temps avant l'utilisation, on y incorpore un catalyseur de réticulation.

20. Utilisation de l'agent de revêtement tel que défini à la revendication 18 pour le laquage de réparation des automobiles.

21. Utilisation de l'agent de revêtement tel que défini à la revendication 8 comme laque de base contenant des pigments métalliques et/ou des pigments et/ou laque de recouvrement d'un laquage à plusieurs couches.

**Claims**

1. A polymer containing silyl groups, the silyl groups being introduced into the polymer through ethylenically unsaturated monomers of the general formula

$$\begin{array}{c} R^1{}_{3-n} \\ | \\ R^2\text{—Si—}X_n \end{array} \qquad (a)$$

where

$R^1$ = alkyl, aryl, acyl or aralkyl having 1 to 10 carbon atoms,
$R^2$ = an organic radical having a polymerizable double bond,
X = a hydrolyzable group, and
n = 1, 2 or 3,

wherein the polymer can be obtained by copolymerization of

a) 0.1 to 40% by weight of the silane monomers (a),

b) 5 to 30% by weight, preferably 8 to 25% by weight, of monomers containing at least 2 polymerizable, ethylenically unsaturated double bonds, and

c) 30 to 90% by weight of ethylenically unsaturated monomers without groups containing active hydrogen, where the sum of a), b) and c) is 100% by weight.

2. A process for the preparation of a polymer containing silyl groups, the silyl groups being introduced into the polymer through ethylenically unsaturated monomers of the general formula

$$\begin{array}{c} R^1{}_{3-n} \\ | \\ R^2\text{—Si—}X_n \end{array} \qquad (a)$$

where

$R^1$ = alkyl, aryl, acyl or aralkyl having 1 to 10 carbon atoms,

$R^2$ = an organic radical having a polymerizable double bond,

X = a hydrolyzable group, and

n = 1, 2 or 3,

wherein, for its preparation,

a) 0.1 to 40% by weight of the silane monomers (a),

b) 5 to 30% by weight, preferably 8 to 25% by weight, of monomers containing at least 2 polymerizable, ethylenically unsaturated double bonds, and

c) 30 to 90% by weight of ethylenically unsaturated monomers without groups containing active hydrogen, where the sum of a), b) and c) is 100% by weight, are copolymerized in an organic solvent using initiators and using at least 2% by weight, relative to the total weight of the monomers, of a polymerization regulator without OH and NH groups at 80°C to 130°C, preferably at 90°C to 120°C.

3. A polymer or the process as claimed in claim 1 or 2, wherein component a) is γ-methacryloxypropyltrimethoxysilane.

4. A polymer or the process as claimed in claim 1 to 3, wherein component b) corresponds to the general formula

$$CH_2=\overset{R}{\overset{|}{C}}-\overset{O}{\overset{\|}{C}}-X-(CH_2)_n-X-\overset{O}{\overset{\|}{C}}-\overset{R}{\overset{|}{C}}=CH_2$$

where

R = H, $CH_3$ or alkyl,

X = O, NH or S, and

n = 2 to 8.

5. A polymer or the process as claimed in claim 1 to 4, wherein component b) is a polycarboxylic acid or unsaturated monocarboxylic acid which is esterified with an unsaturated alcohol containing a polymerizable double bond.

6. A polymer or the process as claimed in claim 1 to 5, wherein component b) is a product of the reaction of a polyisocyanate and an unsaturated alcohol or an unsaturated amine.

7. A polymer or the process as claimed in claim 1 to 6, wherein component b) is a diester of polyethylene gylcol and/or polypropylene glycol having an average molecular weight of less than 1,500, preferably less than 1,000, and acrylic acid and/or methacrylic acid.

8. A polymer or the process as claimed in claim 1 to 7, wherein, in addition to the ethylenically unsaturated monomers a), b) and c), up to 10% by weight of an ethylenically unsaturated carboxamide d) is used, where the sum of a), b), c) and d) is 100% by weight.

9. A polymer or the process as claimed in claim 1 to 8, wherein, in addition to the ethylenically unsaturated monomers a), b), c) and, if appropriate, d), up to 5% by weight of e) ethylenically unsaturated monomers having a hydroxyl, carboxyl or amino group are used, where the sum of a), b), c), if appropriate d) and e) is 100% by weight.

10. A polymer or the process as claimed in claim 4, wherein more than 10% by weight of the monomers b) are used and, if appropriate, up to 10% by weight of an ethylenically unsaturated carboxamide d) and, if appropriate, up to 5% by weight of ethylenically unsaturated monomers having a hydroxyl, carboxyl or amino group e) are also copolymerized, where the sum of a), b), c), if appropriate d) and if appropriate e) is 100% by weight, and the copolymerization is carried out using more than 5% by weight, relative to the total weight of the monomers, of mercaptoethyltriethoxysilane and/or mercaptopropylmethyldimethoxysilane, if appropriate together with other mercapto compounds at a temperature between 100°C and 120°C.

11. A polymer or the process as claimed in claim 4, wherein the ethylenically unsaturated monomers of component b) are employed in a proportion of at least 15% by weight, component c) is mainly acrylate monomers and/or methacrylate monomers and/or maleates and/or fumarates, where the sum of all ethylenically unsaturated monomers is 100% by weight, and the copolymerization is carried out using more than 6% by weight, relative to the weight of monomers, of a mercaptosilane, preferably mercaptoethyltriethoxysilane or mercaptopropylmethyldimethoxysilane, if appropriate together with other mercapto compounds.

12. A polymer or the process as claimed in claim 1 to 2, wherein component b) is more than 10% by weight of divinylaromatics and the polymerization is carried out using more than 10% by weight, relative to the weight of monomers, of mercaptoethyltriethoxysilane and/or mercaptopropylmethyldimethoxysilane.

13. The process as claimed in claim 1 to 12, wherein the initiators used are azo compounds and/or peroxy esters.

14. The process as claimed in claim 2 to 13, wherein the polymerization regulators used are mercaptosilanes, if appropriate together with other mercapto compounds.

15. The process as claimed in claim 14, wherein the polymerization regulator used is mercaptoethyltriethoxysilane.

16. The process as claimed in claim 2 to 15, wherein at least 4% by weight, relative to the total weight of the monomers, of a polymerization regulator are used.

17. The process as claimed in claim 2 to 16, wherein the free-radical polymerization for the preparation of the polymer containing silyl groups is carried out in a fashion such that a solution of the polymer having a solids content of 40—65% by weight results.

18. A coating agent which can be hardened through moisture and which contains the silyl group-containing polymer as claimed in claim 1 and 3 to 12, an organic solvent, if appropriate pigments, fillers and conventional auxiliaries and additives and also a crosslinking catalyst.

19. A process for the preparation of a coating agent which contains the polymer prepared by the processes as claimed in claim 2 to 17, wherein the silyl group-containing polymer, an organic solvent, if appropriate pigments, fillers and conventional auxiliaries and additives are processed into a coating composition by mixing and, if appropriate, dispersing, and the composition is admixed with a crosslinking catalyst shortly before use.

20. The use of the coating agent as claimed in claim 18 for automobile repair paintwork.

21. The use of the coating agent as claimed in claim 18 as a base coat containing metal pigments and/or pigments and/or a top coat of multilayer paintwork.